# EUROPEAN PATENT SPECIFICATION

(11) **EP 1 655 987 B1**
(45) Date of publication and mention of the grant of the patent: **22.08.2007**
(21) Application number: 04026558.9
(22) Date of filing: 09.11.2004
(51) Int. Cl.: H04Q 11/00, H04L 12/423

(54) **A ring network for a burst switching network with centralized management**
Ein Ringnetz für ein Burst-geschaltetes Netz mit zentralem Management
Réseau en anneau pour un réseau de commutation par rafales avec management central

(43) Date of publication of application: 10.05.2006
(73) Proprietor: SIEMENS AKTIENGESELLSCHAFT, 80333 München (DE)
(72) Inventor: De Vega Rodrigo, Miguel, 1200 Woluwe St. Lambert Brussels (BE)

(56) References cited:
- US-A1- 2002 059 408
- QIAO C ET AL: "CHOICES, FEATURES AND ISSUES IN OPTICAL BURST SWITCHING" OPTICAL NETWORKS MAGAZINE, SPIE, BELLINGHAM, WA, US, vol. 1, no. 2, April 2000 (2000-04), pages 36-44, XP000969814 ISSN: 1388-6916
- CAI J ET AL: "An analytical framework for performance comparison of bandwidth reservation schemes in WDM ring" PROCEEDINGS IEEE INFOCOM 2002. THE CONFERENCE ON COMPUTER COMMUNICATIONS. 21ST. ANNUAL JOINT CONFERENCE OF THE IEEE COMPUTER ANDCOMMUNICATIONS SOCIETIES. NEW YORK, NY, JUNE 23 - 27, 2002, PROCEEDINGS IEEE INFOCOM. THE CONFERENCE ON COMPUTER COMMUNICA, vol. VOL. 1 OF 3. CONF. 21, 23 June 2002 (2002-06-23), pages 41-47, XP010593560 ISBN: 0-7803-7476-2

## Description

The present invention relates to transmitting data in a ring in a network as a combination of reserved bandwidth bursts and IP packets that are sent on-the-fly and, more particularly, to an Adaptive Burst Switching Optical Network (APSON) APSON.

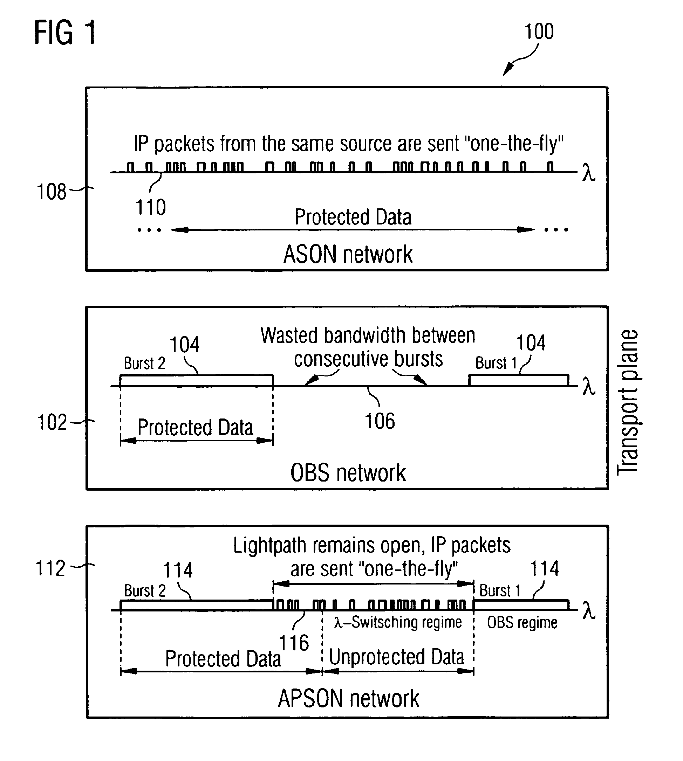

APSON may be thought of as a hybrid network technology between Optical Burst Switching (OBS) and ASON (Automatic Switched Optical Networks). This will be appreciated from Figure 1 which shows the three transport networks 100 side-by-side.

In OBS networks 102, the bandwidth 104 associated to this path is reserved as long as the path is not torn down, which basically means that these bandwidth resources are not available to other sources. In other words, the transmitted data is protected as long as the path exists.

It is important to note, however, that in OBS networks, only the bandwidth equivalent to the duration of the burst is reserved. If another burst wishes to be transferred before this protected data time gap is over, i.e., before the current burst has been transmitted, it will be blocked. In addition, in OBS networks no information can be sent between bursts as shown by the wasted bandwidth section 106.

In ASON (108, Figure 1), data is sent as it arrives, i.e., "on-the-fly" through an established path. The data is normally IP packets 110 and the bandwidth is not reserved. Naturally, this means that ASON is more flexible than OBS, which makes it easier to implement Quality of Service (QoS) rules for treating different customers differently. On the other hand, ASON is not structured and is more difficult to control than OBS.

In APSON 112, the duration of the reserved bandwidth, i.e., the duration of the protected data 114, is detached from the duration of a burst transmission 116. In other words, the APSON scheme is both a λ-switching regime and an unprotected data time gap, wherein the bursts are transmitted under a protected transmission while the IP packets that are sent on-the-fly are transmitted, either protected or unprotected, in the λ-switching. This allows for more flexibility when implementing different quality of service (QoS) to different customers based on, for example, customer plans.

There are similarities between APSON and these previous networks, however, APSON is really a unique network scheme. Prior to the creation of a new lightpath, for example, packets are collected in an aggregation buffer. This is somewhat similar to OBS networks. Some other concepts were borrowed from OBS networks as well, such as the OBS bandwidth reservation scheme. However, APSON is distinctly different than OBS. Most significantly, APSON effectuates a circuit switching philosophy similar to ASON, whilst OBS networks use a packet switching approach. Thus, APSON, while a hybrid of the two network philosophies, is a completely different type of network.

Because APSON is a brand new switching scheme, it has not yet been discussed in the field how to provide a ring topology for APSON. However, it would be advantageous to provide a ring topology to APSON because rings are simple to implement and, for this reason, have historically played an important role in optical networks. For instance, routing, switching and network management tasks are considerably less complex in ring topologies in comparison to meshed topologies. For this reason, rings would be a highly desirable topology for deploying new optical network technologies such as APSON.

The invention aims at providing the basic concepts for the deployment of a simple, yet, highly efficient centralized APSON. In providing a viable centralized approach, special consideration is given to the current technological limitations at the optical layer, such, for example, the switching speed.

Ring topologies have been widely studied in λ-switching networks. More recently, OBS ring networks have re-awakened the interest of the research community and this has resulted in many more-recent studies investigating the performance of rings in light of λ-switching networks. Studies, such as A. Zapata, I. de Miguel, M. Düser, J. Spencer, P. Bayvel, D. Breuer, N. Hanik, and A. Gladisch. Performance comparison of static and dynamic optical metro ring network architectures. *Proceedings ECOC 2003,* have suggested that the most promising architecture in terms of delay, network throughput and the number of wavelengths needed is not OBS but, rather, a variant of OBS called Wavelength Routed OBS networks (WR-OBS). Apparently, the difference is that the source in OBS networks sends a header packet and, after waiting an offset time, sends the burst as well. In WR-OBS networks, by contrast, the source sends a header packet but it waits for an acknowledgement from the network before sending the burst.

The fact that "Zapata" and similar studies point out that WR-OBS networks are the most promising architecture for optical ring networks is hopeful news for APSON. APSON uses a similar acknowledgement-based variant of OBS signalling in order to setup a lightpath. However, it is not yet known for certain whether a ring topology would be as advantageous for APSON. Nor is it certain or defined how a ring topology would be applied for APSON.

To date, there has been no concept for a centralized APSON ring defined. However, encouraging studies such as Zapata's An arbiter node for bandwidth requests is disclosed in US 2002/0059408. is motivating. It would, therefore, be advantageous to find a viable and efficient APSON-based ring solution. Such a solution should, in theory, have even better results than in the ring WR-OBS architecture since APSON has advantages in comparison to OBS-based solutions like WR-OBS networks.

For one thing, an APSON ring topology would be able to reuse the standardized ASON control plane. Moreover, an APSON ring would be easier and quicker to deploy due to fewer technological challenges. An APSON ring would also offer less delay, higher throughput, lower signalling overhead and self-organizing architecture.

APSON-based rings present advantages also in comparison to X-switching approaches. In a pure all-optical λ-switching rings with ***N*** nodes, each node requires a channel in order to receive data from the rest of the nodes. Therefore, a total of ***M* = *N - 1*** channels are needed. Due to the fact that APSON presents time multiplexing of bandwidth resources, the number of wavelengths needed will be reduced compared to the X-switching case.

To explain, if multimode fibers are being used, a channel would represent a wavelength in one of the fibers. But, it must be remembered that a channel is a concept at the logical layer. If monomode fibers are being used, a channel would directly represent one of the fibers. At any rate, the mapping between channels and wavelengths (between logical and physical layer) can be easily achieved according to the type of optical fiber being used (mono- vs. multimode) and whether λ-conversion capabilities are available. With λ-conversion capabilities the number of wavelengths ***W*** needed is ***W* = *M***. In our discussion λ-conversion is not available so the number of wavelengths needed *is* ***W* = *M* + *1* = *N*,** be it in a mono- or multimode fiber.

In APSON, the multiplexing clearly reduces the number of wavelengths needed dramatically. Moreover, there is always a number of optical components associated with each wavelength. Some of these optical components, such as . tunable lasers, are quite expensive. Therefore, the reduction in the number of wavelengths needed has a great impact on cost, which is a main motivation for the invention to propose and research the effectiveness of APSON rings. Heretofore, there has been no application of a ring topology to APSON.

However, the motivation to develop an APSON ring topology belies the following problem. Nowadays, commercially available switching fabrics offer switching speeds usually in the order of milliseconds. This leads to path setup times in the order of seconds, sometimes longer, which is clearly not fast enough for a truly dynamic switching architecture with link capacities in the order of Gbps. With the current switching speeds, every time a new path setup takes place, a non-negligible amount of bandwidth is wasted. This increases the blocking probability, which leads to the need of a higher number of wavelengths and their associated expensive optical hardware, such as tunable lasers. Therefore, the slower the switching fabric and the higher the number of path setups per unit of time the higher the costs in optical hardware. This presents at least one major obstacle to be overcome in order to implement dynamic switching architectures such as ASON, APSON or, for that matter, OBS.

### SUMMARY OF THE INVENTION

In order to reduce hardware costs either faster low-cost switching fabric should be produced or an optical solution that reduces the number of switching actions per unit of time should be used. The first possibility is at present an unlikely solution given the limitations in current technology. The invention focuses on the second alternative to provide a viable ring topology solution for APSON.

The present invention provides a feasible centralized APSON ring with present-day optical components without sacrificing high network performance.

The present invention provides a feasible centralized APSON ring with present-day optical components without sacrificing high network performance.

A method for transmitting data in a ring network that transmits bursts and data packets, characterized in that, sending a setup message from a node i (204ᵢ) to a central node (202) to set up communication between the node i (204ᵢ) and a node j (204ⱼ), stopping a current transmission on a path between the node i (204ᵢ) and a node j (204ⱼ) that transmits bursts and data packets when the current transmission of the path transmits data packets, and establishing the communication between the node i (204ᵢ) and the node j (204ⱼ) along the path.

A system for a ring network that transmits bursts and data packets sent, characterized in that, a node i for sending a setup message to set up a communication between the node i and a node j along a path that transmits a combination of bursts over reserved bandwidth and data packets, a central node (202) for stopping a current transmission of the path when the current transmission of the path transmits data packets, and wherein, the central node (202) establishes the data flow between the node i and the node j along the path.

It shall be appreciated that, since the present invention makes use of APSON, the number of switching actions per unit of time is reduced to zero, or substantially zero, or otherwise reducing, the number of switching actions per unit of time inside the ring network.

In one aspect, and in order to reduce costs and to make the concept feasible with the optical technologies of today, no λ-conversion capabilities inside the ring network will be used.

In another aspect, and in order to reduce costs and to make the concept feasible with the optical technologies of today, no dynamic switching inside the ring network will be used.

### BRIEF DESCRIPTION OF THE DRAWINGS

The drawings illustrate at least one example of the invention, wherein:
Figure 1 shows various transport schemes;
Figure 2 shows a schematic diagram of the present invention;
Figure 3 shows the present invention in terms of functional description; and
Figure 4 shows a variation of the present invention.

### DETAILED DESCRIPTION OF THE PREFERRED EMBODIMENTS

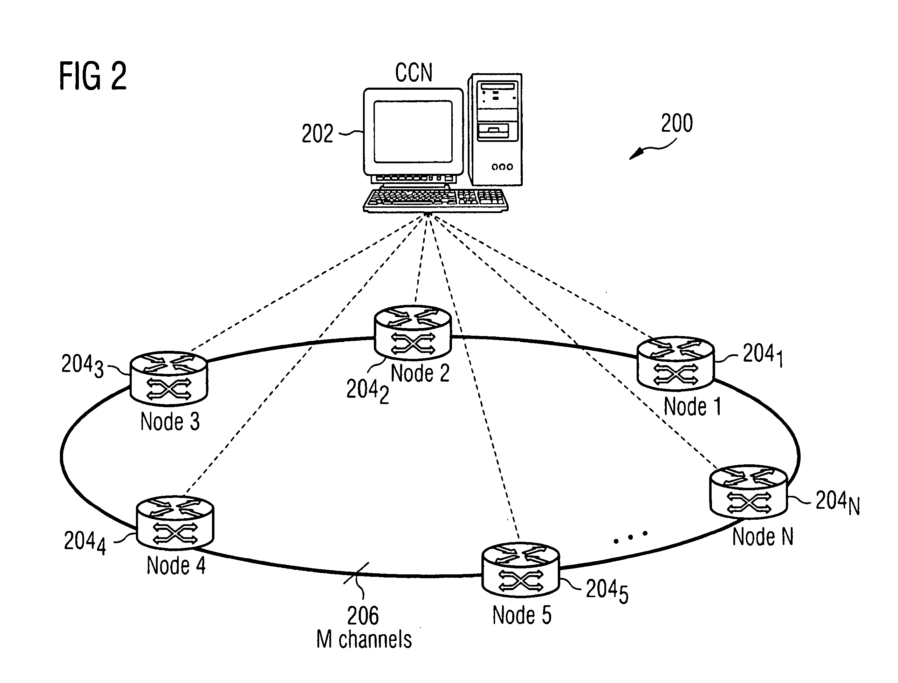

In a centralized APSON architecture 200 shown in Figure 2, a central node (CCN) 202 is in charge of coordinating network signalling tasks such as path setup and teardowns. In contrast, in a de-centralized APSON architecture signalling messages are exchanged among network nodes without the need for a central node to coordinate them. This invention report presents an APSON ring concept based on a centralized APSON architecture.

In the Figure, it is assumed that the centralized ring APSON architecture includes *N* nodes 204, ... in and *M* channels 206.

It should be kept in mind that Figure 2 is a simplified diagram, and the details of the ring network are not described owing to the well-known literature. One point that should be bourn in mind, however, that is not shown is that, if multimode fibers are being used a channel represents a wavelength in one of the fibers. On the other hand, if monomode fibers are being used a channel directly represents one of the fibers.

Due to the fact that APSON provider time multiplexing of the wavelength capacities, the number of channels in the present invention will typically be below the number of nodes ***(M≤N).*** This is a main advantage in comparison to λ-switching networks. Without λ-conversion, an APSON data flow (composed by a burst and possibly IP packets) uses the same wavelength along its path.

Without the luxury of dynamic switching, an APSON data flow uses the same fixed combination of fibers along its path. This means at the logical layer (see figure 1) that the APSON data flow, once established in channel **i**, cannot switch to another channel ***j*** (with ***i≠j***).

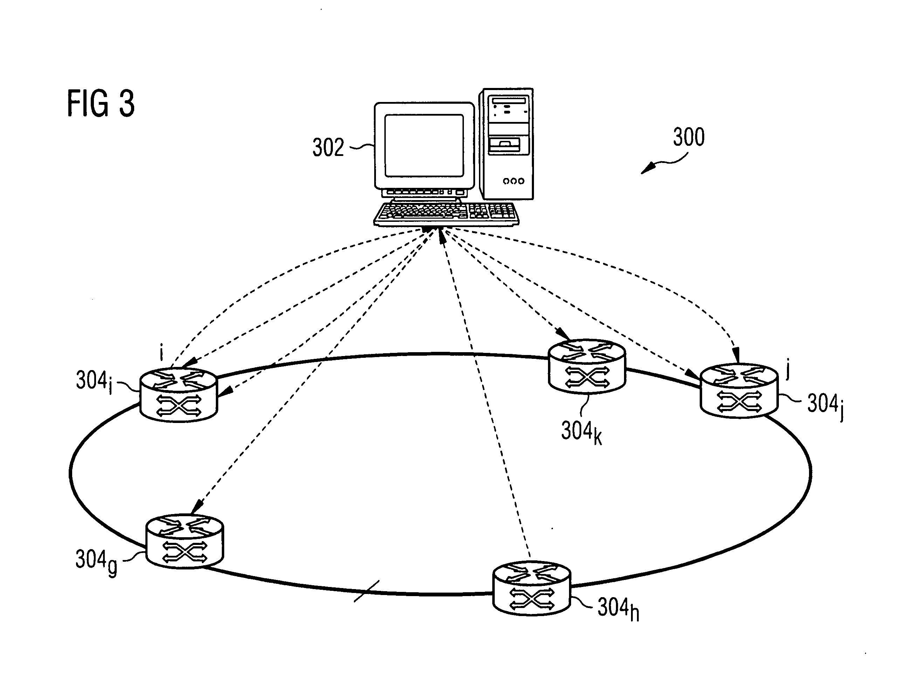

A functional description of the centralized ring APSON 300 will now be described with reference to Figure 3. In order for node ***i*** 304 to send a data flow to node ***j*** 304 s the following steps are provided by the invention preferably, in the following order.

In a first step, each node (304, 304s) receives incoming IP packets, sorts them according to their destination and collects them in different electrical buffers, each one for each destination. Node ***i*** 304, sends a ***path setup*** message to the CCN 302 whenever an algorithm called the "aggregation strategy" decides that enough packets for destination ***j*** 304, have been collected in the corresponding electrical buffer.

In another step, the CCN 302 determines according to a predetermined algorithm that determines the best end-to-end path between ***i*** and ***j*** (304, 304) according to some performance criteria such as the path availability. When the path is chosen, a stop message is sent to the source and destination nodes, for example, ***g*** and ***h*** (304g, 304h) using it, in order to allocate its bandwidth resources for the transmission between ***i*** and ***j*** (for more details on this process see the fifth step below).

In a further step, the CCN 302 sends a ***send*** message to the edge node ***i*** 304, whenever the end-to-end path becomes available and its bandwidth resources have been allocated. When the edge node ***i*** 304, receives the *send* message it begins to transfer the data flow on the wavelength and/or optical fiber indicated in the message.

In an additional step 4, the CCN 302 sends a ***receive*** message to node ***j*** 304j, synchronized with the arrival of the data flow from ***i** 304* informing about the wavelength and/or optical fiber on which the flow arrives. With this information node ***j*** 304j, listens at the indicated wavelength and fiber converting the information it receives to the electrical domain and so recovering the data sent by node ***i*** 304i. Otherwise, if a node does not receive the *receive* message it forwards it without optical-electrical conversion to take place. In this manner, the present invention ensures that the data plane remains all-optical.

In another step, the resource allocation is accomplished. When a data flow from another node **k** 304k interrupts the transmission of the data flow from node ***i*** to ***j** (304i, 304j),* bandwidth resources for the data flow from node ***k** (304k)* are allocated. In this aspect of the invention, nodes ***i*** and ***j*** (304i, 304j) receive a ***stop*** message from the CCN indicating that the transmission and reception on the indicated wavelength and/or optical fiber must cease. For node ***j** (304j)* this means that the optical-electrical conversion from the photons received on the indicated wavelength and/or optical fiber is stopped.

The conditions for the flow interruption to take place may be explained as follows. In a data flow bandwidth is reserved for the transmission of the first **t*_{flow}*** seconds, whereas the rest of the bits of the flow have no bandwidth reservation. This means that another data flow can interrupt the transmission of the current data flow if and only if more than *t_{flow}* seconds have passed since the beginning of the flow transmission.

In an alternative solution, the CCN 302 is released partially from its complexity which in turn relies on the edge nodes. In this manner, in the third and fifth steps set forth above the sending of the messages *send* and *receive* does not need to be synchronized with the transmission and arrival of the first bit of the data flow. In this case, the messages are sent before with an extra field indicating the time until the transmission or arrival of the first bit. Nodes ***i*** and ***j*** (304i, 304j) are equipped with a timer so that they can automatically begin the transmission or reception of the photons on the specified wavelength and/or optical fiber when the timer is triggered. The timer is set according to the value contained in the extra field of the *send* or *receive* messages.

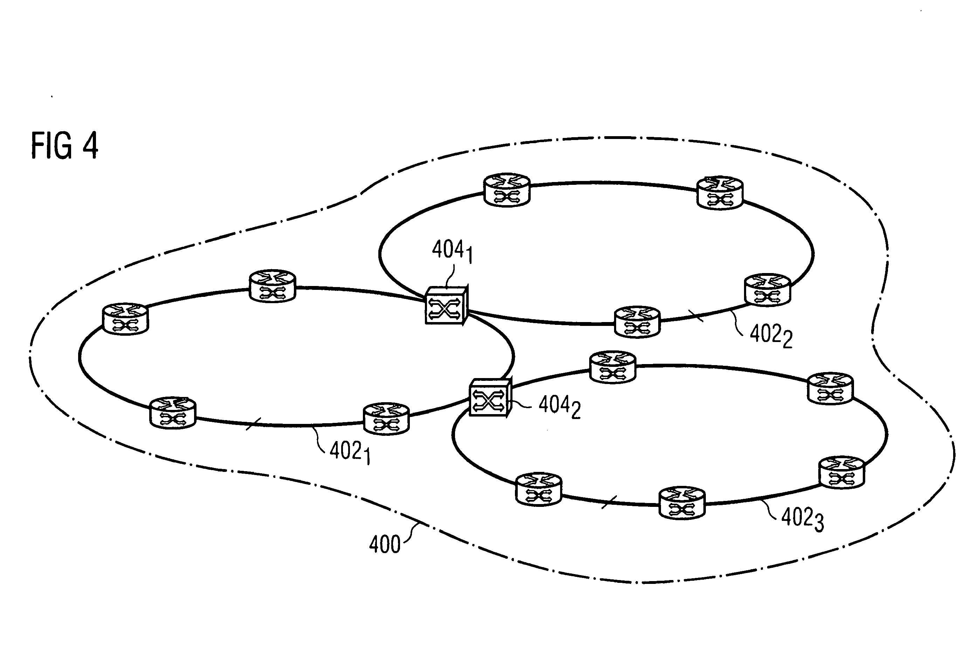

Figure 4 illustrates an example of a possible APSON architecture 400 made from three APSON rings 402₁ - 402₃ interconnected through two Hubs 404₁, 404₂. It shall be appreciated from Figure 3 that the invention is also portable to any number of rings in the ring topology. The invention provides the functionality discussed above for each ring assuring that, for traffic inside each ring, no switching takes place. This provides all of the advantages derived from APSON at a low cost with present-day optical components.

If the different rings of Figure 4 are kept as independent APSON rings, for traffic coming from one ring and going to another ring, either OEO (opto-electro-optic) conversion or dynamic switching must take place (at the hubs). On the other hand, one could operate consider the three rings as one single ring (see Figure 3), in which case the need for OEO in the transport plane or dynamic switching would disappear.

The new Centralized APSON Ring concept of the present invention is advantageous. The solution is valid for both uni- and bidirectional links, and a short routing information (for instance a flag bit 1 or 0) can be easily added in an extra field of the send message in order to indicate the source node whether to send the data flow through the optical fiber on the left or on the right. Due to the efficient wavelength time multiplexing of APSON the number of wavelengths for a given ring topology and given offered traffic volume is reduced in comparison to WR-OBS, OBS and especially to λ-switching networks. Further, each wavelength has associated several optical components, some of which are quite expensive such as the tuneable lasers. Reducing the number of wavelengths means important cost savings on optical components that are no longer needed.

Again, due to the fact that APSON presents the most efficient wavelength time multiplexing in comparison to WR-OBS, OBS architectures, a centralized APSON ring offers a lower delay, delay jitter that their OBS-based counterparts. For the same reason, the blocking probability in centralized APSON rings is virtually zero. The concept allows for QoS implementations and provides an all-optical transport plane. Furthermore, the concept allows to share complexity between the central control node (CCN) and the optical nodes according to the needs or to the hardware requirements (see the fifth step, for example. In addition, switching can be eliminated. As a consequence of this the switching speed of the switching fabric does not play an important role anymore, which allows for a direct cost reduction. Nor does the invention require λ-conversion. For these and other reasons, a centralized APSON ring is an extremely efficient architecture and yet feasible at a low cost with nowadays optical components.

## Claims

1. A method for transmitting data in a ring network that transmits bursts and data packets over a particular path, **characterized in that,**
sending a setup message from a node i (204ᵢ) to a central node (202) to set up communication between the node i (204ᵢ) and a node j (204ⱼ),
stopping a current transmission on a path that transmits bursts or data packets between the node i (204ᵢ) and the node j (204ⱼ) when the current transmission transmits data packets over the path, and
establishing the communication between the node i (204ᵢ) and the node j (204ⱼ) along the path.

2. The method according to preceding claim 1, further **characterized in that,** sending a send message from the central node (202) to the node i (204ᵢ) that indicates the path that is to establish the communication between the node i (204ᵢ) and the node j (204ⱼ).

3. The method according to any of the preceding claims, further **characterized in that,** sending a message to the node j (204ⱼ) that indicates the path that is to establish the data flow between the node i (204ᵢ) and the node j (204ⱼ).

4. The method according to any of the preceding claims, further **characterized in that**, detecting by the node j (204ⱼ) at the indicated wavelength and fiber said message and converting the information it receives to the electrical domain and so recovering the data sent by node i (204ᵢ).

5. The method according to any of the preceding claims, further **characterized in that,** receiving incoming IP packets, sorting the IP packets according to destination and collecting the IP packets for each destination.

6. The method according to any of the preceding claims, further **characterized in that**, determining according to a certain algorithm a best end-to-end path between nodes i (204ᵢ) and j (204ⱼ) according to a predetermined performance criteria.

7. The method according to any of the preceding claims, further **characterized in that**, when a data flow from another node k interrupts the transmission of the data flow from node i (204ᵢ) to j (204ⱼ) , allocating bandwidth resources for the data flow from node k.

8. A system for a ring network that transmits bursts and data packets sent over a particular path, **characterized in that,**
a node i for sending a setup message to set up a communication between the node i and a node j along the path that transmits bursts over reserved bandwidth or data packets,
a central node (202) for stopping a current transmission of the path when the current transmission transmits data packets over the path, and
wherein, the central node (202) establishes the data flow between the node i (204ᵢ) and the node j (204ⱼ) along the path.

9. The system according to preceding claim 8, further **characterized in that**, the central node (202) multiplexes wavelength capacities of M channels (206ᵢ..ₙ) of the ring network in order that the number of channels is significantly below a number of nodes in the ring network.

10. The system according to any of the preceding claims 8-9, wherein, if multimode fibers are being used to transmit data in the centralized ring, a channel represents a wavelength in one of the fibers.

11. The system according to any of the preceding claims 8-10, wherein, if monomode fibers are being used to transmit data in the centralized ring a channel directly represents one of the fibers.

12. The system according to any of the preceding claims 8-11, wherein the centralized ring transmits data without λ-conversion.

13. The system according to any of the preceding claims 8-12, wherein the centralized ring transmits data without dynamic switching.

14. The system according to any of the preceding claims 8-13, further **characterized in that**, multiple rings of a type of the ring network described in claim 11 are interconnected through Hubs.

## Patentansprüche

1. Verfahren zum Übertragen von Daten in einem Ringnetz, das Bursts und Datenpakete über einen bestimmten Pfad überträgt,
**dadurch gekennzeichnet, dass**
eine Verbindungsaufbau-Nachricht von einem Knoten i (204ᵢ) an einen zentralen Knoten (202) gesendet wird, um eine Verbindung zwischen dem Knoten i (204ᵢ) und einem Knoten j (204ⱼ) herzustellen,
eine laufende Übertragung auf einem Pfad, auf dem Bursts oder Datenpakete zwischen dem Knoten i (204ᵢ) und dem Knoten j (204ⱼ) übertragen werden, gestoppt wird, wenn bei der laufenden Übertragung Datenpakete über den Pfad gesendet werden, und
die Verbindung zwischen dem Knoten i (204ᵢ) und dem Knoten j (204ⱼ) entlang des Pfades hergestellt wird.

2. Verfahren gemäß vorstehendem Anspruch 1, ferner **dadurch gekennzeichnet, dass** vom zentralen Knoten (202) zum Knoten i (204ᵢ) eine Senden-Nachricht gesendet wird, die den Pfad angibt, der die Verbindung zwischen dem Knoten i (204ᵢ) und dem Knoten j (204ⱼ) herstellen soll.

3. Verfahren gemäß einem der vorstehenden Ansprüche, ferner **dadurch gekennzeichnet, dass** eine Nachricht an den Knoten j (204ⱼ) gesendet wird, die den Pfad angibt, der den Datenfluss zwischen dem Knoten i (204ᵢ) und dem Knoten j (204ⱼ) herstellen soll.

4. Verfahren gemäß einem der vorstehenden Ansprüche, ferner **dadurch gekennzeichnet, dass** vom Knoten j (204ⱼ) auf der angegebenen Wellenlänge und Glasfaser die besagte Nachricht detektiert, die empfangene Information in die elektrische Form umgewandelt wird und so die vom Knoten i (204ᵢ) gesendeten Daten zurückgewonnen werden.

5. Verfahren gemäß einem der vorstehenden Ansprüche, ferner **dadurch gekennzeichnet, dass** eintreffende IP-Pakete empfangen, die IP-Pakete gemäß ihrem Zielort sortiert und die IP-Pakete für jeden einzelnen Zielort gesammelt werden.

6. Verfahren gemäß einem oder mehreren der vorstehenden Ansprüche, ferner **dadurch gekennzeichnet, dass** gemäß einem bestimmten Algorithmus anhand eines zuvor festgelegten Leistungskriteriums ein bester durchgehender Pfad zwischen den Knoten i (204ᵢ) und j (204ⱼ) ermittelt wird.

7. Verfahren gemäß einem der vorstehenden Ansprüche, ferner **dadurch gekennzeichnet, dass** immer dann, wenn ein Datenfluss von einem anderen Knoten k die Übertragung des Datenflusses vom Knoten i (204ᵢ) zum Knoten j (204ⱼ) unterbricht, dem Datenfluss vom Knoten k Bandbreitenressourcen zugeteilt werden.

8. System für ein Ringnetz, das Bursts und Datenpakete überträgt, die über einen bestimmten Pfad gesendet werden, **gekennzeichnet durch**
einen Knoten i zum Senden einer Verbindungsaufbau-Nachricht, um eine Verbindung zwischen dem Knoten i und einem Knoten j entlang des Pfades herzustellen, auf dem Bursts über reservierte Bandbreite oder Datenpakete übertragen werden,
einen zentralen Knoten (202) zum Stoppen einer laufenden Übertragung auf dem Pfad, wenn die laufende Übertragung Datenpakete über den Pfad sendet,
wobei der zentrale Knoten (202) den Datenfluss zwischen dem Knoten i (204ᵢ) und dem Knoten j (204ⱼ) entlang des Pfades herstellt.

9. System gemäß dem vorstehenden Anspruch 8, ferner **dadurch gekennzeichnet, dass** der zentrale Knoten (202) Wellenlängenkapazitäten von M Kanälen (206_{1..n}) des Ringnetzes multiplext, damit die Anzahl der Kanäle erheblich geringer ist als eine Anzahl von Knoten im Ringnetz.

10. System gemäß einem der vorstehenden Ansprüche 8-9, wobei für den Fall, dass zum Übertragen von Daten im zentralisierten Ring Multimodefasern verwendet werden, ein Kanal eine Wellenlänge in einer der Glasfasern repräsentiert.

11. System gemäß einem der vorstehenden Ansprüche 8-10, wobei für den Fall, dass zum Übertragen von Daten im zentralen Ring Monomodefasern verwendet werden, ein Kanal direkt eine der Glasfasern repräsentiert.

12. System gemäß einem der vorstehenden Ansprüche 8-11, wobei der zentrale Ring Daten ohne Lambda-Umsetzung überträgt.

13. System gemäß einem der vorstehenden Ansprüche 8-12, wobei der zentrale Ring Daten ohne Dynamic Switching überträgt.

14. System gemäß einem der vorstehenden Ansprüche 8-13, ferner **dadurch gekennzeichnet, dass** mehrere Ringe eines Typs des in Anspruch 11 beschriebenen Ringnetzes über Hubs miteinander verbunden sind.

## Revendications

1. Procédé de transmission de données dans un réseau en anneau qui transmet des rafales et des paquets de données sur un chemin particulier, **caractérisé par** l'envoi d'un message d'établissement d'un noeud i (204ᵢ) vers un noeud central (202) pour établir une communication entre le noeud i (204ᵢ) et un noeud j (204ⱼ) ,
l'arrêt d'une transmission en cours sur un chemin qui transmet des rafales ou des paquets de données entre le noeud i (204ᵢ) et le noeud j (204ⱼ) lorsque la transmission en cours transmet des paquets de données sur le chemin et
l'établissement de la communication entre le noeud i (204ᵢ) et le noeud j (204ⱼ) le long du chemin.

2. Procédé selon la revendication 1, **caractérisé, en outre, par** l'envoi d'un message d'envoi du noeud central (202) vers le noeud i (204ⱼ) qui indique le chemin sur lequel doit être établie la communication entre le noeud i (204ᵢ) et le noeud j (204ⱼ) .

3. Procédé selon l'une quelconque des revendications précédentes, **caractérisé, en outre, par** l'envoi d'un message au noeud j (204ⱼ) qui indique le chemin sur lequel doit être établi le flux de données entre le noeud i (204ᵢ) et le noeud j (204ⱼ) .

4. Procédé selon l'une quelconque des revendications précédentes, **caractérisé, en outre, par** la détection dudit message par le noeud j (204ⱼ) sur la longueur d'onde et fibre indiquées, la conversion de l'information qu'il reçoit dans le domaine électrique et la récupération des données envoyées par le noeud i (204ᵢ).

5. Procédé selon l'une quelconque des revendications précédentes, **caractérisé, en outre, par** la réception de paquets IP entrants, le tri des paquets IP selon la destination et la collecte des paquets IP pour chaque destination.

6. Procédé selon l'une quelconque des revendications précédentes, **caractérisé, en outre, par** la détermination, conformément à un certain algorithme, d'un meilleur chemin de bout en bout entre les noeuds i (204ᵢ) et j (204ⱼ) selon des critères de performance prédéterminés.

7. Procédé selon l'une quelconque des revendications précédentes, **caractérisé, en outre, en ce que**, lorsqu'un flux de données venant d'un autre noeud k interrompt la transmission du flux de données du noeud i (204ᵢ) vers le noeud j (204ⱼ), des ressources en bande passante sont allouées pour le flux de données venant du noeud k.

8. Système pour un réseau en anneau qui transmet des rafales et des paquets de données envoyés sur un chemin particulier, **caractérisé par**
un noeud i pour envoyer un message d'établissement pour établir une communication entre le noeud i et un noeud j le long du chemin qui transmet des rafales sur une bande passante réservée ou des paquets de données,
un noeud central (202) pour stopper une transmission en cours du chemin lorsque la transmission en cours transmet des paquets de données sur le chemin et
dans lequel le noeud central (202) établit le flux de données entre le noeud i (204ᵢ) et le noeud j (204ⱼ) le long du chemin.

9. Système selon la revendication précédente 8, **caractérisé, en outre, en ce que** le noeud central (202) multiplexe les capacités de longueurs d'onde de M canaux (206_{1...n}) du réseau en anneau de manière à ce que le nombre de canaux soit nettement inférieur à un nombre de noeuds dans le réseau en anneau.

10. Système selon l'une quelconque des revendications précédentes 8 - 9, dans lequel, si on utilise des fibres multimode pour transmettre des données dans l'anneau centralisé, un canal représente une longueur d'onde dans une des fibres.

11. Système selon l'une quelconque des revendications précédentes 8 - 10, dans lequel, si on utilise des fibres monomode pour transmettre des données dans l'anneau centralisé, un canal représente directement une des fibres.

12. Système selon l'une quelconque des revendications précédentes 8 - 11, dans lequel l'anneau centralisé transmet des données sans conversion λ.

13. Système selon l'une quelconque des revendications précédentes 8 - 12, dans lequel l'anneau centralisé transmet des données sans commutation dynamique.

14. Système selon l'une quelconque des revendications précédentes 8 - 13, **caractérisé, en outre, en ce que** de multiples anneaux du type du réseau en anneau décrit dans la revendication 11 sont interconnectés par des concentrateurs.
